# EUROPÄISCHE PATENTSCHRIFT

(11) **EP 3 412 926 B1**
(45) Veröffentlichungstag und Bekanntmachung des Hinweises auf die Patenterteilung: **11.11.2020**
(21) Anmeldenummer: 17174885.8
(22) Anmeldetag: 08.06.2017
(51) Int. Cl.: F16D 65/18, B60T 13/74

(54) **PLANETENRAD-GETRIEBEANORDNUNG INSBESONDERE FÜR EINE ELEKTROMECHANISCHE BETRIEBSBREMSE ODER EINE ELEKTROMECHANISCHE PARKBREMSE FÜR EIN KRAFTFAHRZEUG**
PLANETARY GEARING TRANSMISSION ASSEMBLY, IN PARTICULAR FOR AN ELECTROMECHANICAL SERVICE BRAKE OR AN ELECTROMECHANICAL PARKING BRAKE FOR A MOTOR VEHICLE
SYSTÈME DE TRANSMISSION À ENGRENAGE PLANÉTAIRE EN PARTICULIER POUR UN FREIN DE SERVICE ÉLECTROMÉCANIQUE OU UN FREIN DE STATIONNEMENT ÉLECTROMÉCANIQUE POUR UN VÉHICULE AUTOMOBILE

(43) Veröffentlichungstag der Anmeldung: 12.12.2018
(73) Patentinhaber: IMS Gear SE & Co. KGaA, 78166 Donaueschingen (DE); Continental Teves AG & Co. OHG, 60488 Frankfurt am Main (DE)
(72) Erfinder: HOFSCHULTE, Wolfram, 79848 Bonndorf (DE); SYNOVZIK, Wilfried, 78183 Hüfingen (DE); STÖHR, Johannes, 78052 Weilersbach (DE); JUNGBECKER, Johann, 55576 Badenheim (DE); LINHOFF, Paul, 61267 Neu-Aspach (DE); BÖHM, Jürgen, 65558 Oberneisen (DE)
(74) Vertreter: Westphal, Mussgnug & Partner Patentanwälte mbB

(56) Entgegenhaltungen:
- EP-A1- 2 767 812
- EP-A1- 3 124 345
- WO-A1-2004/013513
- CN-A- 101 273 212
- US-A1- 2004 163 900
- US-B1- 6 412 610

## Beschreibung

Die vorliegende Erfindung betrifft eine Planetenrad-Getriebeanordnung insbesondere für eine elektromechanische Betriebsbremse oder eine elektromechanische Parkbremse für ein Kraftfahrzeug.

Zum Prioritätszeitpunkt der vorliegenden Anmeldung werden Betriebsbremsen von Kraftfahrzeugen nahezu ausschließlich mittels Hydrauliksystemen betrieben. Im Gegensatz dazu werden die Parkbremsen; auch Feststellbremsen genannt, weitgehend elektromechanisch betrieben, wodurch sich eine Reihe von Vorteilen erzielen lässt: Herkömmliche Parkbremsen, auch Handbremsen genannt, werden mittels eines Seilzugs und eins Handhebels manuell bedient. Der Handhebel ist üblicherweise in der Mittelkonsole des Kraftfahrzeugs angeordnet und muss zu Betätigen frei zugänglich sein. Entsprechend viel Platz nimmt der Handhebel weg, was der Gestaltung des Innenraums eines Kraftfahrzeugs bestimmte Grenzen setzt. Im Gegensatz dazu genügt ein relativ kleiner Schalter, um die elektromechanische Parkbremse zu betätigen, der nicht notwendigerweise in der Mittelkonsole angeordnet werden muss, so dass der Gestaltung des Innenraums deutlich weniger Grenzen gesetzt werden.

Weiterhin bedarf es beispielsweise beim Anfahren an Steigungen einer gewissen Übung, den Handhebel so zu betätigen, dass das Kraftfahrzeug einerseits nicht rückwärts rollt, andererseits der Motor nicht abgewürgt wird, wenn die herkömmliche Parkbremse zu spät gelöst wird. Im Gegensatz dazu kann eine elektromechanische Parkbremse von einer Steuereinheit angesteuert werden, welche die elektromechanische Parkbremse im richtigen Augenblick löst, ohne dass der Fahrer aktiv eingreifen muss. Folglich kann die elektromechanische Parkbremse als Anfahrhilfe verwendet werden. Zudem kann die elektromechanische Parkbremse in ein Sicherheitssystem ebenfalls unter Verwendung einer Steuereinheit eingebunden werden, welche nach einer aufgrund einer Gefahrensituation autonom ausgelösten Bremsung automatisch das Kraftfahrzeug nach dem Stillstand feststellt und das unkontrollierte Wegrollen verhindert. Dies kann dann relevant sein, wenn der Fahrer bewusstlos ist oder aufgrund seiner Verletzungen nicht in der Lage ist, die Parkbremse zu betätigen.

Ein Feststellen und ein Abbremsen unterscheiden sich im Wesentlichen nur dadurch, dass beim Abbremsen das Kraftfahrzeug die Geschwindigkeit reduziert werden soll, während beim Feststellen das Kraftfahrzeug steht und eine Beschleunigung verhindert werden soll. Sofern nicht anders vermerkt, gelten die folgenden Ausführungen für das Abbremsen gleichermaßen für das Feststellen.

Wie elektromechanische Parkbremsen weisen auch elektromechanische Betriebsbremsen eine Reihe von Vorteilen gegenüber herkömmlichen, hydraulisch betätigten Betriebsbremsen auf. Allein schon aufgrund der Tatsache, dass kein Hydrauliksystem mehr benötigt wird, kann die Betriebssicherheit dadurch verbessert werden, dass die Gefahr des Versagens der Betriebsbremsen durch defekte oder poröse Bremsschläuche bei elektromechanischen Bremsen nicht mehr gegeben ist. Die Hydraulikflüssigkeit ist üblicherweise umweltgefährdend, so dass auch diese Problematik nicht mehr gegeben ist. Zudem nimmt das Hydrauliksystem Platz weg, der bei der Verwendung einer elektromechanischen Betriebsbremse eingespart werden kann. Zwar lassen sich auch herkömmliche Betriebsbremsen in ein Sicherheitssystem einbinden, um beispielsweise ein Blockieren der Räder bei einer Vollbremsung zu verhindern (Antiblockiersystem), allerdings sind hierzu Aktuatoren notwendig, welche den Bremsdruck im entsprechenden Abschnitt des Hydrauliksystems auf- und wieder abbauen. Diese Aktoren können bei einer elektromechanischen Betriebsbremse entfallen. Zudem ist die Einbindung in ein Sicherheitssystem mit einer elektromechanischen Betriebsbremse einfacher und besser skalierbar.

Allerdings weisen elektromechanische Betriebsbremsen folgenden Nachteil auf: Bekannte elektromechanische Betriebsbremsen weisen eine elektronische Antriebseinheit auf, welche mit einem Planetenradgetriebe zusammenwirkt. Abtriebsseitig des Planetenradgetriebes ist eine Bremseinheit angeordnet, welche einen Reibbelag umfasst, der auf eine Bremsscheibe wirkt. Sowohl der Reibbelag als auch die Bremsscheibe können sich im Betrieb des Kraftfahrzeugs unterschiedlich abnutzen. Diese Abnutzung spielt bei herkömmlichen, hydraulisch betätigten Betriebsbremsen keine Rolle, da aufgrund der direkten Verbindung des Hydrauliksystems mit der Bremseinheit sichergestellt ist, dass mit einem bestimmten Bremsdruck immer eine entsprechende Bremskraft auf die Bremsscheibe aufgebracht wird. Diese Rücckopplung ist bei elektromechanischen Betriebsbremsen nicht gegeben. Wenn also die elektronische Antriebseinheit mit einer Regelgröße beaufschlagt wird, die einen bestimmten Wert aufweist, ist es nicht möglich, eine Aussage darüber zu treffen, welche Bremskraft tatsächlich auf die Bremsscheibe aufgebracht wird. Da ein Kraftfahrzeug üblicherweise vier gebremste Räder aufweist, ist es nicht unüblich, dass sich die Bremsscheibe und der Reibbelag an jedem Rad unterschiedlich stark abnutzen. In diesem Fall werden die Räder unterschiedlich stark abgebremst, wenn die elektronische Antriebseinheit mit einer Regelgröße desselben Wertes beaufschlagt wird, was zu Giermomenten und damit zu unkontrollierten Bewegungen des Kraftfahrzeugs bei der Bremsung führen kann. Aufgrund der fehlenden Information über den "Istwert" der tatsächlich wirkenden Bremskraft ist es nicht möglich, elektromechanische Betriebsbremsen in einen Regelkreis zu integrieren.

Um diesem Nachteil zu begegnen, schlagen die US 6 412 610 B1, die DE 196 52 230 A1 und die DE 10 2011 002 565 A1 vor, eine Kraftmesseinrichtung zum Messen der auf die Bremsscheibe wirkende Kraft in die elektromechanische Betriebsbremse zu integrieren, so dass es möglich ist, einen Soll-Istwertvergleich der Bremskraft durchzuführen, wodurch auch eine elektromechanische Betriebsbremse in einen Regelkreis integriert werden kann. In allen Fällen wird eine entlang der Drehachse des Planetengetriebes wirkende Kraft gemessen.

Nachteilig an diesen elektromechanischen Betriebsbremsen ist jedoch ihr relativ komplexer und raumintensiver Aufbau, so dass sich diese elektromechanischen Betriebsbremsen nur für bestimmte Kraftfahrzeuge durchsetzen konnten.

Die für die elektromechanischen Betriebsbremsen erwähnten Nachteile gelten prinzipiell auch für Parkbremsen, die einen weitgehend identischen Aufbau aufweisen wie Betriebsbremsen. Um sicherzustellen, dass ein Kraftfahrzeug auch dann nicht wegrollt, wenn es an einer Steigung geparkt wird, ist es notwendig, eine bestimmte Bremskraft auf die Bremsscheibe aufzubringen. Wenn die elektronische Antriebseinheit mit einer bestimmten Regelgröße beaufschlagt wird, mit welcher eine Bremskraft auf die Bremsscheibe aufgebracht wird, so kann diese Bremskraft ausreichen, das Kraftfahrzeug sicher festzustellen. Allerdings kann sich die Bremskraft mit der Zeit ändern. Dieser Fall kann beispielsweise dann eintreten, wenn die Parkbremse aktiviert wird, wenn die Bremsscheibe sehr heiß ist und sich die Bremsscheibe anschließend abkühlt. Folglich ist es auch bei Parkbremsen nicht möglich, eine Aussage darüber zu treffen, welche Bremskraft tatsächlich auf die Bremsscheibe aufgebracht wird.

Aufgabe einer Ausführungsform der vorliegenden Erfindung ist es, eine elektromechanische Betriebsbremse und eine elektromechanische Parkbremse anzugeben, mit welchen den oben genannten Nachteilen wirksam begegnet werden kann. Insbesondere sollen die elektromechanische Betriebsbremse und die elektromechanische Parkbremse einen einfachen und raumsparenden Aufbau haben und einfach herzustellen sein.

Diese Aufgabe wird mit den in den Ansprüchen 1, 8, 9, 10 und 12 angegebenen Merkmalen gelöst. Vorteilhafte Ausführungsformen sind Gegenstand der Unteransprüche.

Eine Ausführungsform der Erfindung betrifft eine Planetenrad-Getriebeanordnung insbesondere für eine elektromechanische Betriebsbremse oder eine elektromechanische Parkbremse für ein Kraftfahrzeug, umfassend ein zentrales Sonnenrad, eine Anzahl von Planetenrädern, welche drehbar auf einem Planetenträger gelagert ist, ein die Planetenräder umschließendes Hohlrad, und eine Abtriebswelle, wobei die Planetenräder derart mittels des Planetenträgers gelagert sind, dass sie sowohl am Sonnenrad als auch am Hohlrad abrollen können, wobei entweder das Sonnenrad oder der Planetenträger oder das Hohlrad mittels einer Halteeinheit mit einem Haltemoment drehfest gehalten wird und wobei zwischen der Halteeinheit und dem drehfest gehaltenen Element oder zwischen der Halteeinheit und einem mit dem gehaltenen Element drehfest verbundenen Zwischenbauteil eine Kraftmesseinrichtung zum Messen der zwischen dem gehaltenen Element und der Halteeinheit infolge des Halteelements wirkenden Kraft angeordnet ist, wobei die wirkende Kraft in einem festen Verhältnis zum von der Abtriebswelle abgenommenen Drehmoment steht.

Unter dem "drehfest gehaltenem Element" soll das Element aus der Gruppe, die vom Sonnenrad, vom Planetenträger und dem Hohlrad gebildet wird, verstanden werden, welches mittels der Halteeinheit drehfest gehalten wird. Je nach baulicher Ausgestaltung wirkt die Halteeinheit nicht direkt mit dem drehfest gehaltenem Element zusammen, sondern es kann notwendig sein, ein Zwischenbauteil wie einen Lagerbolzen und/oder eine Welle vorzusehen, mit welchem ein Drehmoment vom drehfest gehaltenen Element an die Halteinheit übertragen werden kann.

Unter einer Planetenrad-Getriebeanordnung soll eine Getriebeanordnung verstanden werden, welche ein Planetenradgetriebe, in vielen Fällen auch als Planetengetriebe bezeichnet, umfasst, deren Aufbau hinlänglich bekannt ist und hier nicht näher beschrieben werden muss. Damit ein Planetenradgetriebe Drehzahl und Drehmoment bezüglich des Antriebs und des Abtriebs verändern kann, muss entweder das Sonnenrad, der Planetenträger oder das Hohlrad festgehalten werden und der Antrieb und der Abtrieb über die nicht festgehaltenen Element erfolgen. Der Erfindung liegt dabei die Erkenntnis zugrunde, dass das zum Festhalten des drehfest gehaltenen Elements notwendige, von der Halteeinheit aufzubringende Drehmoment, auch als Haltemoment bezeichnet, umso größer ist, je größer das über die Abtriebswelle abgenommene Drehmoment ist. In Bezug auf eine elektromechanische Betriebsbremse oder eine elektromechanische Parkbremse wird das abgenommene Drehmoment von der auf die Bremsscheibe wirkenden Bremskraft bestimmt. Folglich lässt sich über das notwendige Haltemoment eine Aussage über die wirkende Bremskraft treffen. Das Haltemoment wird erfindungsgemäß dadurch bestimmt, dass zwischen dem gehaltenen Element und der Halteeinheit eine Kraftmesseinrichtung zum Messen der zwischen dem gehaltenen Element und der Halteeinheit wirkenden Kraft angeordnet ist. Anhand der zwischen dem gehaltenen Element und der Halteeinheit wirkenden Kraft kann mit einer einfachen Umrechnung auf das Haltemoment und die wirkende Bremskraft geschlossen werden.

Die vorschlagsgemäße Anordnung der Kraftmesseinrichtung erfordert nur sehr geringe bauliche Veränderungen. Zudem lässt sich die Kraftmesseinrichtung dort anordnen, wo es aus fertigungstechnischer Sicht besonders günstig ist, so dass die vorliegende Planetenrad-Getriebeanordnung einfach herzustellen ist. Beispielsweise kann die Kraftmesseinrichtung dort angeordnet werden, wo freier Bauraum vorhanden ist oder wo sie gut montiert werden kann. Die Herstellung der vorliegenden Planetenrad-Getriebeanordnung kann im Vergleich zu bekannten elektromechanischen Betriebsbremsen und Parkbremsen deutlich vereinfacht werden.

Nach Maßgabe einer weiteren Ausführungsform weist die Kraftmesseinrichtung einen Kraftaufnehmer auf. Kraftaufnehmer sind in vielfältigen Bauweisen erhältlich, so dass die für den Anwendungsfall geeignete Bauweise verwendet werden kann. Zudem werden Kraftaufnehmer in verschiedenen Anwendungsbereichen verwendet, so dass diese zuverlässig sind und viel Erfahrung im Umgang vorliegt. Diese Vorteile vereinfachen die Konstruktion, die Herstellung und den Betrieb der vorschlagsgemäßen Planetenrad-Getriebeanordnung.

In einer weitergebildeten Ausführungsform kann der Kraftaufnehmer als ein Federkörper-Kraftaufnehmer ausgestaltet sein. Aufgrund der Krafteinwirkung wird der Federkörper des Kraftaufnehmers elastisch verformt. Die Kraftaufnahme muss in der vorgeschriebenen Richtung erfolgen. Die Verformung des Federkörpers Metall wird über Dehnungsmessstreifen, deren elektrischer Widerstand sich mit der Dehnung ändert, in die Änderung einer elektrischen Spannung umgewandelt. Über einen Messverstärker werden die elektrische Spannung und damit die Dehnungsänderung registriert. Diese kann aufgrund der elastischen Eigenschaften des Metalls in einen Kraftmesswert umgerechnet werden, in dem der Kraftaufnehmer kalibriert wird.

Federkörper-Kraftaufnehmer zeichnen sich durch eine besondere Robustheit und eine geringe Störanfälligkeit aus. Sie können beispielsweise Biegebalken, Ringtorsionsfedern, S-förmige Federkörper, Dehnzylinder oder Membran-Federkörper umfassen. Somit liegen verschiedene Bauformen vor, aus denen die für den jeweiligen Anwendungsbereich beste Auswahl getroffen werden kann. Kriterien für die Auswahl können die bevorzugte Beanspruchung auf Zug oder Druck, die wirkenden Kräfte und die geforderte Genauigkeit sein.

Bei einer weitergebildeten Ausführungsform kann die Kraftmesseinrichtung eine Anzahl von Piezo-Kraftaufnehmern umfassen. Piezoelektrische Kraftaufnehmer können sehr steif ausgelegt werden und insbesondere hochdynamische Kräfte messen, die je nach Ausführung bis zu 60 kHz betragen können.

Bei einer weiteren Ausführungsform kann die Kraftmesseinrichtung eine Anzahl von Kraftaufnehmern mit elektromagnetischer Kompensation umfassen. Diese Art von Kraftaufnehmern eignet sich insbesondere dann, wenn sehr kleine Kräfte präzise gemessen werden sollen.

Eine weitergebildete/weitere Ausführungsform zeichnet sich dadurch aus, dass die Kraftmesseinrichtung eine Anzahl von magnetostriktiven Elementen umfasst. Unter Magnetostriktion ist die Deformation magnetischer und insbesondere ferromagnetischer Stoffe infolge eines angelegten magnetischen Feldes zu verstehen. Dabei erfährt der Körper bei konstantem Volumen eine elastische Längenänderung. Diese Art von Kraftaufnehmern eignet sich insbesondere dann, wenn sehr kleine Kräfte präzise gemessen werden sollen.

Eine weitergebildete Ausführungsform ist dadurch gekennzeichnet, dass die Planetenrad-Getriebeanordnung ein Gehäuse umfasst und die Halteeinheit vom Gehäuse gebildet wird. Planetenrad-Getriebeanordnungen umfassen üblicherweise ohnehin ein Gehäuse, welches zweckmäßigerweise als Halteeinheit verwendet werden kann. Es ist kein zusätzliches Bauteil notwendig, um die vorschlagsgemäße Planetenrad-Getriebeanordnung mit einer Halteeinheit auszustatten, was den Aufbau und die Montage einfach hält.

Eine Ausgestaltung der Erfindung betrifft eine elektromechanische Betriebsbremse für ein Kraftfahrzeug, umfassend eine elektronische Antriebseinheit, eine Planetenrad-Getriebeanordnung nach einem der vorherigen Ausführungsformen, welche mittels der Antriebseinheit antreibbar ist, wobei die Kraftmesseinrichtung zum Messen der zwischen dem gehaltenen Element und der Halteeinheit wirkenden Kraft ein entsprechendes Kraftwertsignal erzeugt, und eine Bremseinheit zum Abbremsen des Kraftfahrzeugs, welche mittels der Antriebseinheit unter Verwendung der Planetenrad-Getriebeanordnung betätigbar ist.

Eine Ausbildung der Erfindung betrifft eine elektromechanische Parkbremse für ein Kraftfahrzeug, umfassend eine elektronische Antriebseinheit, eine Planetenrad-Getriebeanordnung nach einem der vorherigen Ausführungsformen, welche mittels der Antriebseinheit antreibbar ist, wobei die Kraftmesseinrichtung zum Messen der zwischen dem gehaltenen Element und der Halteeinheit wirkenden Kraft ein entsprechendes Kraftwertsignal erzeugt, und eine Bremseinheit zum Feststellen des Kraftfahrzeugs, welche mittels der Antriebseinheit unter Verwendung der Planetenrad-Getriebeanordnung betätigbar ist.

Die elektronische Antriebseinheit kann einen Elektromotor umfassen, dessen abgegebenes Drehmoment regelbar ist.

Die Bremseinheit umfasst üblicherweise eine Bremsscheibe, die mit einem Rad des Kraftfahrzeugs drehfest verbunden ist. Zudem umfasst die Bremseinheit ein Paar von Reibbelägen, welche durch eine axiale Verstellung mehr oder weniger stark auf die Bremsscheibe wirken und folglich eine Bremskraft auf die Bremsscheibe aufbringen. Darüber hinaus weist die Bremseinheit eine Umwandlungseinrichtung auf, mit welcher die rotatorische Bewegung der Abtriebswelle der Planetenrad-Getriebeanordnung in eine translatorische Bewegung zum axialen Verstellen der Reibbeläge umgewandelt werden kann. Die Umwandlungseinrichtung kann dabei eine Gewindespindel umfassen. In einem Kraftfahrzeug sind üblicherweise mehrere Bremseinheiten, in der Regel vier Bremseinheiten verbaut, die jeweils individuell und unabhängig voneinander von der Steuereinheit angesteuert werden können.

Eine Ausbildung der Erfindung betrifft ein Kraftfahrzeug mit einer elektromechanischen Betriebsbremse nach der zuvor genannten Ausgestaltung und/oder mit einer elektromechanischen Parkbremse nach der oben erläuterten Ausbildung. Vorschlagsgemäß können die Betriebsbremsen und die Parkbremsen mit derselben Antriebseinheit aktiviert werden, was die Anzahl an Komponenten im Kraftfahrzeug reduziert. Hierdurch wird Bauraum eingespart. Weiterhin sinkt mit der Anzahl der verbauten Teile die Ausfallwahrscheinlichkeit.

In einer weiteren Ausführung umfasst das Kraftfahrzeug einen Sollwertgeber, mit welchem ein Sollwert für die Bremskraft vorgebbar ist, mit der die Bremseinheit das Kraftfahrzeug abbremsen soll, wobei der Sollwertgeber ein entsprechendes Sollwertsignal erzeugt, und eine Steuereinheit, welche das Kraftwertsignal und das Sollwertsignal empfängt, aus dem Kraftwertsignal den Istwert der in der Bremseinheit wirkenden Bremskraft berechnet und mit dem Sollwert vergleicht und die elektronische Antriebseinheit je nach Ergebnis des Vergleichs entsprechend ansteuert.

Der Sollwertgeber kann im Falle der Betriebsbremse das Bremspedal des Kraftfahrzeugs oder insbesondere im Falle der Parkbremse die Steuereinheit selbst sein, welche aufgrund von den Fahrzeugzustand betreffenden Daten, die von entsprechenden Sensoren geliefert werden, einen Sollwert für die Bremskraft vorgibt. Derartige Sensoren können beispielsweise die Drehgeschwindigkeit der Räder, das Giermoment des Kraftfahrzeugs oder den Schlupf an den Rädern des Kraftfahrzeugs messen. Die Steuereinheit kann aus diesen Daten eine Bremskraft für jede Bremseinheit berechnen, um den Fahrzeugzustand zu stabilisieren.

Eine Ausgestaltung der Erfindung betrifft ein Verfahren zum Betreiben einer elektromechanischen Betriebsbremse und/oder einer elektromechanischen Parkbremse für ein Kraftfahrzeug, wobei die elektromechanische Betriebsbremse eine elektronische Antriebseinheit, eine Planetenrad-Getriebeanordnung nach einem der zuvor diskutierten Ausgestaltungen, welche mittels der Antriebseinheit antreibbar ist, eine Bremseinheit zum Abbremsen des Kraftfahrzeugs, welche mittels der Antriebseinheit unter Verwendung der Planetenrad-Getriebeanordnung betätigbar ist, umfasst und das Kraftfahrzeug einen Sollwertgeber, mit welchem ein Sollwert für die Bremskraft vorgebbar ist, mit der die Bremseinheit das Kraftfahrzeug abbremsen soll, und eine Steuereinheit aufweist, wobei das Verfahren folgende Schritte umfasst:
- Erzeugen eines dem Sollwert entsprechenden Sollwertsignals mittels des Sollwertgebers,
- Empfangen des Sollwertsignals mittels der Steuereinheit,
- Erzeugen eines der zwischen dem gehaltenen Element und der Halteeinheit wirkenden Kraft entsprechenden Kraftwertsignals mittels der Kraftmesseinrichtung,
- Empfangen des Kraftwertsignals und Berechnen des Istwerts der in der Bremseinheit wirkenden Bremskraft mittels der Steuereinheit,
- Vergleichen des Istwerts mit dem Sollwert mittels der Steuereinheit, und
- Ansteuern der elektronischen Antriebseinheit je nach Ergebnis des Vergleichs mittels der Steuereinheit.

Die technischen Effekte und Vorteile, die sich mit der vorliegenden elektromechanischen Betriebsbremse, der vorliegenden elektromechanischen Parkbremse dem vorschlagsgemäßen Kraftfahrzeug sowie dem vorschlagsgemäßen Verfahren erreichen lassen, entsprechen denjenigen, die für die vorliegende Planetenrad-Getriebeanordnung erörtert worden sind. Zusammenfassend sei darauf hingewiesen, dass die vorschlagsgemäße Anordnung der Kraftmesseinrichtung nur sehr geringe bauliche Veränderungen erfordert. Zudem lässt sich die Kraftmesseinrichtung dort anordnen, wo es aus fertigungstechnischer Sicht besonders günstig ist, so dass die vorliegende Planetenrad-Getriebeanordnung einfach herzustellen ist. Beispielsweise kann die Kraftmesseinrichtung dort angeordnet werden, wo freier Bauraum vorhanden ist oder wo sie gut montiert werden kann. Die Herstellung der vorliegenden Planetenrad-Getriebeanordnung kann im Vergleich zu bekannten elektromechanischen Betriebsbremsen deutlich vereinfacht werden. Aus der zwischen dem gehaltenen Element und der Halteeinheit wirkenden Kraft lässt sich durch eine relativ einfache Umrechnung auf die in der Bremseinheit wirkende Kraft schließen, so dass der von der Steuereinheit zu leistende Rechenaufwand gering ist und die Programmierung der Steuereinheit vereinfacht wird.

Beispielhafte Ausführungsformen der Erfindung werden im Folgenden unter Bezugnahme auf die beigefügten Zeichnungen näher erläutert. Es zeigen
- Figur 1: ein erstes Ausführungsbeispiel einer erfindungsgemäßen Planetenrad-Getriebeanordnung,
- Figur 2a): ein erstes Ausführungsbeispiel einer erfindungsgemäßen Kraftmesseinrichtung,
- Figur 2b): ein zweites Ausführungsbeispiel einer erfindungsgemäßen Kraftmesseinrichtung,
- Figur 2c): ein drittes Ausführungsbeispiel einer erfindungsgemäßen Kraftmesseinrichtung,
- Figur 3: ein zweites Ausführungsbeispiel einer erfindungsgemäßen Planetenrad-Getriebeanordnung,
- Figur 4: ein drittes Ausführungsbeispiel einer erfindungsgemäßen Planetenrad-Getriebeanordnung,
- Figur 5: ein Ausführungsbeispiel einer erfindungsgemäßen elektromechanischen Betriebsbremse, und
- Figur 6: eine Draufsicht auf ein Kraftfahrzeug mit zwei elektromechanischen Betriebsbremsen und zwei elektromechanischen Parkbremsen ausgestattet ist, jeweils anhand von Prinzipskizzen.

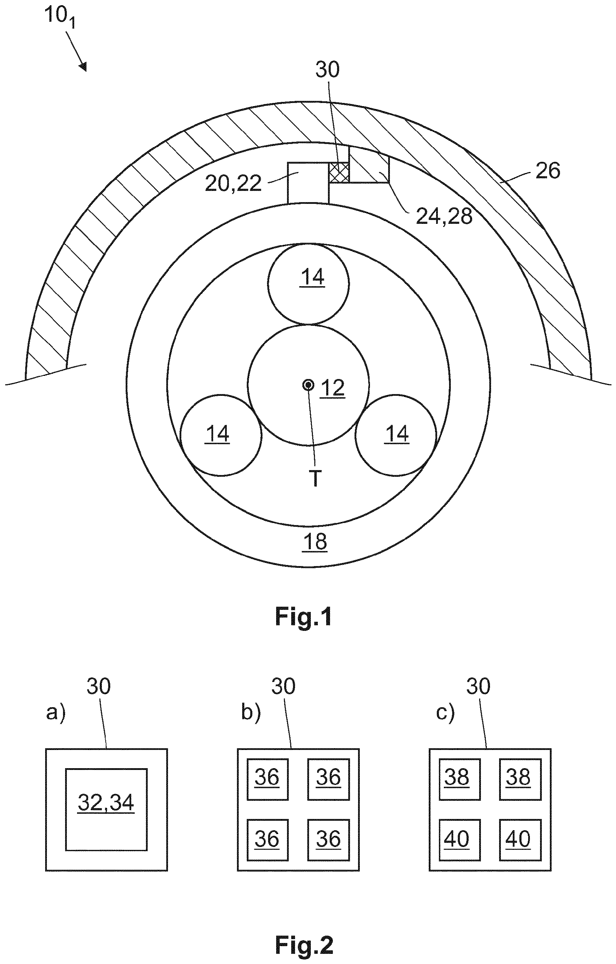

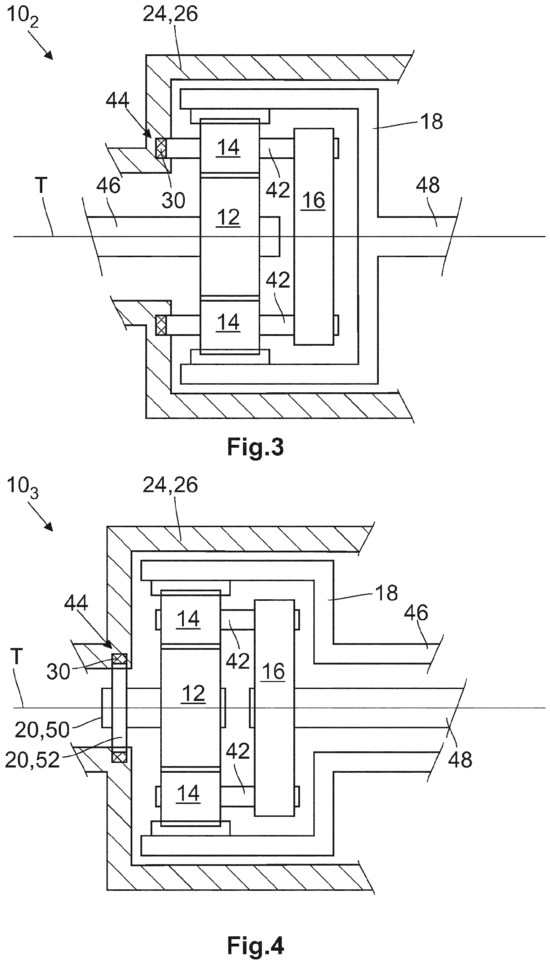

In Figur 1 ist ein erstes Ausführungsbeispiel einer erfindungsgemäßen Planetenrad-Getriebeanordnung 10₁ anhand einer prinzipiellen Schnittzeichnung dargestellt. Die Planetenrad-Getriebeanordnung 10₁ umfasst ein Sonnenrad 12, auf welchem sich im dargestellten Beispiel drei Planetenräder 14 abrollen, die drehbar auf einen in Figur 1 nicht dargestellten Planetenträger 16 (siehe Figuren 3 und 4) gelagert sind. Weiterhin umfasst die Planetenrad-Getriebeanordnung 10₁ ein Hohlrad 18, welches konzentrisch zum Sonnenrad 12 angeordnet ist und sowohl das Sonnenrad 12 als auch die Planetenräder 14 umschließt. Die Planetenräder 14 rollen dabei nicht nur am Sonnenrad 12, sondern auch am Hohlrad 18 ab. Sowohl das Sonnenrad 12 als auch die Planetenräder 14 und das Hohlrad 18 weisen hier nicht dargestellte Verzahnungen auf. Während das Sonnenrad 12 als auch die Planetenräder 14 jeweils eine Außenverzahnung aufweisen, weist das Hohlrad 18 eine Innenverzahnung auf.

Das Hohlrad 18 ist mit einem Zwischenbauteil 20 verbunden, welches in diesem Ausführungsbeispiel als ein erster Vorsprung 22 ausgeführt ist und radial nach außen vom Hohlrad 18 absteht. Alternativ kann der erste Vorsprung 22 auch direkt in das Hohlrad 18 integriert oder das Hohlrad 18 mit einer Vertiefung versehen werden, so dass kein separates Zwischenbauteil 20 notwendig ist.

Darüber hinaus umfasst die Planetenrad-Getriebeanordnung 10₁ eine Halteeinheit 24, die im dargestellten Ausführungsbeispiel als ein an einem Gehäuse 26 befestigter zweiter Vorsprung 28 ausgebildet ist, der radial nach innen ragt. Zwischen dem Zwischenbauteil 20 und der Halteeinheit 24 ist eine Kraftmesseinrichtung 30 angeordnet.

Die Planetenrad-Getriebeanordnung 10₁ kann beispielsweise auf folgende Weise betrieben werden: Das Sonnenrad 12 wird auf eine nicht näher gezeigte Weise um eine Drehachse T gedreht, welche senkrecht zur Schnittebene der Figur 1 verläuft, was zur Folge hat, dass sich die Planetenräder 14 am mittels der Halteeinheit 24 drehfest gehaltenen Hohlrad 18 abrollen. Hierdurch dreht sich der nicht dargestellte Planetenträger 16 um seine eigene Achse, die mit der Drehachse T des Sonnenrad 12 zusammen fällt. Je nachdem, wie groß das am Planetenträger 16 abgenommene Drehmoment ist, muss das Hohlrad 18 mit einem mehr oder weniger großen Drehmoment, auch als Haltemoment bezeichnet, drehfest gehalten werden, so dass zwischen dem Zwischenbauteil 20 und der Halteeinheit 24 eine entsprechende Kraft wirkt. Je nach Drehrichtung wirkt auf die Kraftmesseinrichtung 30 eine Zug- oder Druckkraft, welche in einem festen Verhältnis zum am Planetenträger 16 abgenommenen Drehmoment steht. Diese Zug- oder Druckkraft wird von der Kraftmesseinrichtung 30 gemessen, so dass hierdurch auf das abgenommene Drehmoment geschlossen werden kann.

In Figur 2a) ist ein erstes Ausführungsbeispiel der Kraftmesseinrichtung 30 dargestellt, welche einen Kraftaufnehmer 32 umfasst. Der Kraftaufnehmer 32 kann als ein Federkörper-Kraftaufnehmer 34 ausgestaltet sein und einen Biegebalken, eine Ringtorsionsfeder, einen S-förmigen Federkörper, einen Dehnzylinder und/oder einen Membran-Federkörper aufweisen.

In Figur 2b) ist ein zweites Ausführungsbeispiel der erfindungsgemäßen Kraftmesseinrichtung 30 dargestellt, welche insgesamt vier Piezo-Kraftaufnehmer 36 aufweist.

In Figur 2c) ist ein drittes Ausführungsbeispiel einer erfindungsgemäßen Kraftmesseinrichtung 30 anhand einer Prinzipskizze dargestellt, welche insgesamt zwei Kraftaufnehmer mit elektrischer Kompensation 38 und zwei magnetostriktive Elemente 40 umfasst.

In Figur 3 ist ein zweites Ausführungsbeispiel der erfindungsgemäßen Planetenrad-Getriebeanordnung 10₂ anhand einer prinzipiellen Schnittdarstellung gezeigt, wobei die Drehachse T des Sonnenrads 12 in der Schnittebene der Figur 3 verläuft. Der Aufbau gleicht im Wesentlichen demjenigen des ersten Ausführungsbeispiels, welches in Figur 1 dargestellt ist. Im Gegensatz dazu ist hier jedoch der Planetenträger 16 drehfest festgehalten. Der Planetenträger 16 weist pro Planetenrad 14 einen Lagerbolzen 42 auf, auf welchen die Planetenräder 14 drehbar gelagert sind. Im dargestellten Beispiel greifen die Lagerbolzen 42 in jeweils eine Bohrung 44 des als die Halteeinheit 24 fungierenden Gehäuses 26 ein. Die Kraftmesseinrichtung 30 ist zwischen dem Lagerbolzen 42 und der Wandung der Bohrung 44 angeordnet. Die Kraftmesseinrichtung 30 kann dabei den Lagerbolzen 42 ringförmig umschließen. Da die Lagerbolzen 42 Bestandteil jedes Planetenträgers 16 sind, ist in diesem Ausführungsbeispiel keine Zwischenbauteil 20 notwendig, um den Planetenträger 16 drehfest zu halten.

Wird das Sonnenrad 12 über eine Antriebswelle 46 um die Drehachse T gedreht, überträgt sich die Drehung des Sonnenrad 12 auf die Planetenräder 14, die sich jedoch nur ortsfest um die Lagerbolzen 42 des drehfest gehaltenen Planetenträgers 16 drehen können, wodurch eine Drehung des Hohlrad 18 um die Drehachse T bewirkt wird. Das Hohlrad 18 ist mit einer Abtriebswelle 48 verbunden, an welcher ein Drehmoment auf nicht näher gezeigte Weise abgenommen wird.

Die Kraftmesseinrichtung 30 misst dabei die Kraft, welche zwischen den Lagerbolzen 42 und den Bohrungen 44 wirkt. Diese Kraft steht in fester Beziehung zum an der Abtriebswelle 48 abgenommenen Drehmoment.

In Figur 4 ist ein drittes Ausführungsbeispiel der erfindungsgemäßen Planetenrad-Getriebeanordnung 10₃ ebenfalls anhand einer Schnittdarstellung gezeigt. Der Aufbau gleicht im Wesentlichen demjenigen des ersten und des zweiten Ausführungsbeispiels, allerdings ist in diesem Fall das Sonnenrad 12 drehfest gehalten, wozu das Zwischenbauteil 20 eine drehfest mit dem Sonnenrad 12 verbundene Welle 50 und einen die Welle 50 durchlaufenden Haltebolzen 52 umfasst. Der Haltebolzen 52 greift in eine Bohrung 44 des Gehäuses 26 ein. Ähnlich wie im zweiten Ausführungsbeispiel umgibt die Kraftmesseinrichtung 30 den Haltebolzen 52 ringförmig und ist zwischen dem Haltebolzen 52 und der Wandung der Bohrung 44 angeordnet.

Wird beispielsweise das Hohlrad 18 auf nicht näher dargestellte Weise mittels der als eine Hohlwelle ausgeführten Antriebswelle 46 um die Drehachse T gedreht, so wird diese Drehung in eine Drehung des Planetenträgers 16 umgesetzt, der mit der Abtriebswelle 48 drehfest verbunden ist. Das Haltemoment, welches zum Festhalten des Sonnenrad 12 notwendig ist und welche mit der Kraftmesseinrichtung 30 bestimmt werden kann, steht in einem festen Verhältnis zu dem an der Abtriebswelle 48 abgenommenen Drehmoment.

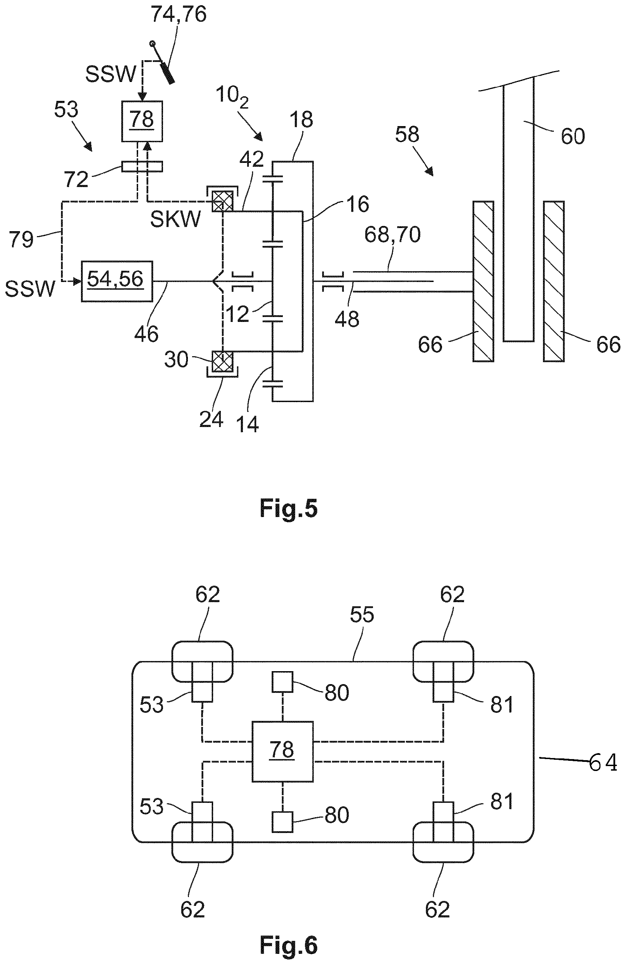

In Figur 5 ist eine Prinzipskizze eines Ausführungsbeispiels einer elektromagnetischen Betriebsbremse 53 eines Kraftfahrzeugs 55 dargestellt (siehe Figur 6). Die elektromagnetische Betriebsbremse 53 weist eine elektronische Antriebseinheit 54 auf, die im dargestellten Ausführungsbeispiel einen Elektromotor 56 umfasst. Der Elektromotor 56 gibt über die Antriebswelle 46 ein Drehmoment an das Sonnenrad 12 der Planetenrad-Getriebeanordnung 10₂ ab, welche nach dem zweiten Ausführungsbeispiel (siehe Figur 3) ausgeführt ist. Wie bereits erwähnt, wird der Planetenträger 16 mittels der Halteeinheit 24 drehfest gehalten, so dass sich infolge der Drehung des Sonnenrad 12 das Hohlrad 18 dreht. Die Drehung des Hohlrads 18 wird über die Abtriebswelle 48 an eine Bremseinheit 58 zum Abbremsen des Kraftfahrzeugs 55 weitergeleitet, welche in diesem Ausführungsbeispiel eine Bremsscheibe 60 umfasst, die mit einem nicht dargestellten Rad 62 des Kraftfahrzeugs 55 (siehe Figur 6) drehfest verbunden ist. Weiterhin umfasst die Bremseinheit 58 zwei Reibbeläge 66, welche axial verschoben werden können, wodurch sie mit der Bremsscheibe 60 in Kontakt treten und eine Bremskraft auf die Bremsscheibe 60 aufbringen, woraufhin die Bremsscheibe 60 und somit das Rad 62 des Kraftfahrzeugs 55 gebremst werden. Um die Drehung des Hohlrads 18 und der mit dem Hohlrad 18 drehfest verbundenen Abtriebswelle 48 in eine translatorische Bewegung zum axialen Verstellen der Reibbeläge 66 umzuwandeln, weist die Bremseinheit 58 eine Umwandlungseinrichtung 68 auf, die im dargestellten Beispiel als eine Gewindespindel 70 ausgeführt ist.

Weiterhin weist die elektromechanische Betriebsbremse 53 eine Schnittstelle 72 auf, mit welcher sie mit einem Sollwertgeber 74 verbunden werden kann, der typischerweise ein Bremspedal 76 umfassen kann. Zudem kann die elektromechanische Betriebsbremse 53 über die Schnittstelle 72 an eine Steuereinheit 78 angeschlossen werden. Je nach Ausgestaltung können die Steuereinheit 78 und/oder der Sollwertgeber 74 zu einem elektromechanischen Betriebsbremssystem zusammengefasst werden.

Die elektromechanische Betriebsbremse 53 wird auf folgende Weise betrieben:
Der Fahrer des Kraftfahrzeugs 55 betätigt das Bremspedal 76 mit einer bestimmten Kraft, wodurch er einen Sollwert für die Bremskraft vorgibt, mit der die Bremseinheit 58 das Kraftfahrzeug 55 abbremsen soll. Der Sollwertgeber 74 erzeugt ein entsprechendes Sollwertsignal SSW und leitet dies über elektrische Leitungen 79 an die Steuereinheit 78 weiter. Die Steuereinheit 78 steuert den Elektromotor 56 entsprechend an, so dass dieser ein entsprechendes Drehmoment auf die Antriebswelle 46 und folglich auf das Sonnenrad 12 überträgt. Wie bereits erwähnt, bewirkt die Drehung des Sonnenrad 12 eine Drehung des Hohlrads 18 und der damit verbundenen Abtriebswelle 48, die von der Umwandlungseinrichtung 68 in eine translatorische Bewegung umgewandelt wird, so dass die Reibbeläge 66 mit einer entsprechenden Bremskraft auf die Bremsscheibe 60 geschoben werden. Die Bremskraft, die zwischen den Reibbelägen und der Bremsscheibe 60 wirkt, bestimmt das von der Abtriebswelle 48 des Hohlrad 18 abgenommene Drehmoment, das wiederum das Haltemoment bestimmt, mit welchen der Planetenträger 16 drehfest gehalten werden muss. Das Haltemoment bestimmt die zwischen der Halteeinheit 24 und dem Lagerbolzen 42 des Planetenträgers 16 wirkende Kraft, die von der Kraftmesseinrichtung 30 gemessen wird. Die Kraftmesseinrichtung 30 erzeugt ein entsprechendes Kraftwertsignal SKW und leitet dieses ebenfalls über elektrische Leitungen 79 an die Steuereinheit 78 weiter. Die Steuereinheit 78 kann nun das Kraftwertsignal SKW in den Istwert der in der Bremseinheit 58 wirkenden Bremskraft umrechnen und mit dem im Sollwertsignal SSW enthaltenen Sollwert der Bremskraft vergleichen und bei einer Abweichung den Elektromotor 56 entsprechend ansteuern. Für den Fall, dass der Istwert geringer ist als der Sollwert der Bremskraft, bewirkt die Steuereinheit 78, dass der Elektromotor 56 ein höheres Drehmoment abgibt, wohingegen im umgekehrten Fall die Steuereinheit 78 bewirkt, dass der Elektromotor 56 ein geringeres Drehmoment abgibt. Die erfindungsgemäße elektromechanische Betriebsbremse 53 ist somit regelbar.

In Figur 6 ist eine prinzipielle Draufsicht auf ein Kraftfahrzeug 55 dargestellt, welches insgesamt zwei erfindungsgemäße elektromechanische Betriebsbremsen 53 und zwei elektromechanische Parkbremsen 81 aufweist, die über dieselbe zentrale Steuereinheit 78 betätigt werden. Da die Figur 6 nur den prinzipiellen Aufbau der Betriebsbremsen 53 und der Parkbremsen 81 zeigt, wird zeichnerisch nicht zwischen ihnen unterschieden, auch wenn sich ihr Aufbau im Detail unterscheidet.

Jede der elektromechanischen Betriebsbremsen 53 und jede der elektromechanischen Parkbremsen 81 kann unabhängig von der anderen elektromechanischen Betriebsbremse 53 gesteuert oder geregelt werden, so dass beispielsweise Sicherheitssysteme wie ein Antiblockiersystem oder ein elektronisches Stabilitätsprogramm realisiert werden können, bei denen jedes Rad 62 zielgerichtet abgebremst wird. Hierzu kann das Kraftfahrzeug 55 eine Anzahl von Sensoren 80 umfassen, welche Informationen zum Fahrzustand des Kraftfahrzeugs 55 sammeln, in entsprechende Signale umwandeln und an die Steuereinheit 78 weiterleiten. Diese Sensoren 80 können beispielsweise die Drehgeschwindigkeit, die Gierrate des Kraftfahrzeugs 55 oder den Schlupf der Räder 62 erfassen. Je nach Fahrzustand kann die Steuereinheit 78 selbst eine Abbremsung eines oder mehrerer der Räder 62 veranlassen, ohne dass der Fahrer das Bremspedal 76 betätigt. In diesem Fall wirkt die Steuereinheit 78 selbst als Sollwertgeber 74. Auch für den Fall, dass das Kraftfahrzeug 55 mittels der Parkbremse 81 festgestellt wurde und die Kraftmesseinrichtung ein Abnehmen der Bremskraft beispielsweise infolge eines Abkühlens der Bremsscheibe 60 registriert, kann die Steuereinheit 78 den Sollwert erhöhen (nachstellen) und somit sicherstellen, dass das Kraftfahrzeug nicht beginnt zu rollen.

### Bezugszeichenliste

- 10, 10₁ - 10₃: Planetenrad-Getriebeanordnung
- 12: Sonnenrad
- 14: Planetenrad
- 16: Planetenträger
- 18: Hohlrad

- 20: Zwischenbauteil
- 22: erster Vorsprung
- 24: Halteeinheit
- 26: Gehäuse
- 28: zweiter Vorsprung

- 30: Kraftmesseinrichtung
- 32: Kraftaufnehmer
- 34: Federkörper-Kraftaufnehmer
- 36: Piezo-Kraftaufnehmer
- 38: Kraftaufnehmer mit elektromagnetischer Kompensation

- 40: magnetostriktives Element
- 42: Lagerbolzen
- 44: Bohrung
- 46: Antriebswelle
- 48: Abtriebswelle

- 50: Welle
- 52: Haltebolzen
- 53: elektromechanische Betriebsbremse
- 54: Antriebseinheit
- 55: Kraftfahrzeug
- 56: Elektromotor
- 58: Bremseinheit
- 60: Bremsscheibe
- 62: Rad
- 64: Kraftfahrzeug
- 66: Reibbelag
- 68: Umwandlungseinrichtung
- 70: Gewindespindel
- 72: Schnittstelle
- 74: Sollwertgeber
- 76: Bremspedal
- 78: Steuereinheit
- 79: elektrische Leitung
- 80: Sensoren
- 81: elektromechanische Parkbremse
- SKW: Kraftwertsignal (Ist)
- SSW: Sollwertsignal
- T: Drehachse

## Patentansprüche

1. Planetenrad-Getriebeanordnung insbesondere für eine elektromechanische Betriebsbremse (53) oder eine elektromechanische Parkbremse (81) für ein Kraftfahrzeug (64), umfassend
- ein zentrales Sonnenrad (12),
- eine Anzahl von Planetenrädern (14), welche drehbar auf einem Planetenträger (16) gelagert ist, und
- ein die Planetenräder (14) umschließendes Hohlrad (18), und
- eine Abtriebswelle (48),
- wobei sich die Planetenräder (14) derart mittels des Planetenträgers (16) gelagert sind, dass sie sowohl am Sonnenrad (12) als auch am Hohlrad (18) abrollen können, wobei
- entweder das Sonnenrad (12) oder der Planetenträger (16) oder das Hohlrad (18) mittels einer Halteeinheit (24) mit einem Haltemoment drehfest gehalten wird und wobei zwischen der Halteeinheit (24) und dem drehfest gehaltenen Element oder zwischen der Halteeinheit (24) und einem mit dem gehaltenen Element drehfest verbundenen Zwischenbauteil (20) eine Kraftmesseinrichtung (30) zum Messen der zwischen dem gehaltenen Element und der Halteeinheit (24) infolge des Haltemoments wirkenden Kraft angeordnet ist, **dadurch gekennzeichnet, dass** < die wirkende Kraft in einem festen Verhältnis zum von der Abtriebswelle (48) abgenommenen Drehmoment steht.

2. Planetenrad-Getriebeanordnung nach Anspruch 1,
**dadurch gekennzeichnet, dass** die Kraftmesseinrichtung (30) einen Kraftaufnehmer (32) aufweist.

3. Planetenrad-Getriebeanordnung nach Anspruch 2,
**dadurch gekennzeichnet, dass** der Kraftaufnehmer (32) als ein Federkörper-Kraftaufnehmer (34) ausgestaltet ist.

4. Planetenrad-Getriebeanordnung nach einem der Ansprüche 2 oder 3,
**dadurch gekennzeichnet, dass** die Kraftmesseinrichtung (30) eine Anzahl von Piezo-Kraftaufnehmern (36) umfasst.

5. Planetenrad-Getriebeanordnung nach einem der vorherigen Ansprüche,
**dadurch gekennzeichnet, dass** die Kraftmesseinrichtung (30) eine Anzahl von Kraftaufnehmern mit elektromagnetischer Kompensation (38) umfasst.

6. Planetenrad-Getriebeanordnung nach einem der vorherigen Ansprüche,
**dadurch gekennzeichnet, dass** die Kraftmesseinrichtung (30) eine Anzahl von magnetostriktiven Elementen (40) umfasst.

7. Planetenrad-Getriebeanordnung nach einem der vorherigen Ansprüche,
**dadurch gekennzeichnet, dass** die Planetenrad-Getriebeanordnung (10) ein Gehäuse (26) umfasst und die Halteeinheit (24) vom Gehäuse (26) gebildet wird.

8. Elektromechanische Betriebsbremse (53) für ein Kraftfahrzeug (64), umfassend
- eine elektronische Antriebseinheit (54),
- eine Planetenrad-Getriebeanordnung (10) nach einem der Ansprüche 1 bis 7, welche mittels der Antriebseinheit (54) antreibbar ist, wobei die Kraftmesseinrichtung (30) zum Messen der zwischen dem gehaltenen Element und der Halteeinheit (24) wirkenden Kraft ein entsprechendes Kraftwertsignal (SKW) erzeugt, und
- eine Bremseinheit (58) zum Abbremsen des Kraftfahrzeugs (64), welche mittels der Antriebseinheit (54) unter Verwendung der Planetenrad-Getriebeanordnung (10) betätigbar ist.

9. Elektromechanische Parkbremse (81) für ein Kraftfahrzeug (64), umfassend
- eine elektronische Antriebseinheit (54),
- eine Planetenrad-Getriebeanordnung (10) nach einem der Ansprüche 1 bis 7, welche mittels der Antriebseinheit (54) antreibbar ist, wobei die Kraftmesseinrichtung (30) zum Messen der zwischen dem gehaltenen Element und der Halteeinheit (24) wirkenden Kraft ein entsprechendes Kraftwertsignal (SKW) erzeugt, und
- eine Bremseinheit (58) zum Feststellen des Kraftfahrzeugs (64), welche mittels der Antriebseinheit (54) unter Verwendung der Planetenrad-Getriebeanordnung (10) betätigbar ist.

10. Kraftfahrzeug (64) mit einer elektromechanischen Betriebsbremse (53) nach Anspruch 8 und/oder einer elektromechanischen Parkbremse (81) nach Anspruch 9.

11. Kraftfahrzeug (64) nach Anspruch 9 oder nach Anspruch 10, umfassend
- einen Sollwertgeber (74), mit welchem ein Sollwert für die Bremskraft vorgebbar ist, mit der die Bremseinheit (58) das Kraftfahrzeug (64) abbremsen soll, wobei der Sollwertgeber (74) ein entsprechendes Sollwertsignal (SSW) erzeugt, und
- eine Steuereinheit (78), welche das Kraftwertsignal (SKW) und das Sollwertsignal (SSW) empfängt aus dem Kraftwertsignal (SKW) den Istwert der in der Bremseinheit (58) wirkenden Bremskraft berechnet und mit dem Sollwert vergleicht und die elektronische Antriebseinheit (54) je nach Ergebnis des Vergleichs entsprechend ansteuert.

12. Verfahren zum Betreiben einer elektromechanischen Betriebsbremse (53) und/oder einer elektromechanischen Parkbremse für ein Kraftfahrzeug (64), wobei die elektromechanische Betriebsbremse (53)
- eine elektronische Antriebseinheit (54),
- eine Planetenrad-Getriebeanordnung (10) nach einem der Ansprüche 1 bis 7, welche mittels der Antriebseinheit (54) antreibbar ist, und (74)
- eine Bremseinheit (58) zum Abbremsen des Fahrzeugs, welche mittels der Antriebseinheit (54) unter Verwendung der Planetenrad-Getriebeanordnung betätigbar ist, und das Kraftfahrzeug (64)
- einen Sollwertgeber (74), mit welchem ein Sollwert für die Bremskraft vorgebbar ist, mit der die Bremseinheit (58) das Kraftfahrzeug (64) abbremsen soll, und
- eine Steuereinheit (78) aufweist, wobei das Verfahren folgende Schritte umfasst:
- Erzeugen eines der zwischen dem gehaltenen Element und der Halteeinheit (24) wirkenden Kraft entsprechendes Kraftwertsignal (SKW) mittels der Kraftmesseinrichtung (30),
- Empfangen des Kraftwertsignals (SKW) und Berechnen des Istwerts der in der Bremseinheit (58) wirkenden Bremskraft mittels der Steuereinheit (78),
- Erzeugen eines dem Sollwert entsprechenden Sollwertsignals (SSW) mittels des Sollwertgebers (74),
- Empfangen des Sollwertsignals (SSW) und Vergleichen des Istwerts mit dem Sollwert mittels der Steuereinheit (78), und
- Ansteuern der elektronischen Antriebseinheit (54) je nach Ergebnis des Vergleichs mittels der Steuereinheit (78) .

## Claims

1. Planetary gear train arrangement, in particular for an electromechanical service brake (53) or an electromechanical parking brake (81) for a motor vehicle (64), comprising
- a central sun gear (12),
- numerous planet gears (14) which are rotatably mounted on a planet carrier (16), and
- a ring gear (18) which encircles the planet gears (14), and
- a driven shaft (48),
- wherein the planet gears (14) are mounted, by means of the planet carrier (16), such that they can roll around both the sun gear (12) and the ring gear (18), wherein
- either the sun gear (12) or the planet carrier (16) or the ring gear (18) is non-rotatably held with a holding torque by means of a holding unit (24) and wherein a force measuring device (30) for measuring the force acting between the held element and the holding unit (24) as a result of the holding torque is disposed between the holding unit (24) and the non-rotatably held element or between the holding unit (24) and a non-rotatably held intermediate component (20),
**characterized in that** the acting force stands in direct relationship to the torque received from the driven shaft (48).

2. Planetary gear train arrangement in accordance with claim 1,
**characterized in that** the force measuring device (30) comprises a force transducer (32).

3. Planetary gear train arrangement in accordance with claim 2,
**characterized in that** the force transducer (32) is implemented as a spring body force transducer (34).

4. Planetary gear train arrangement in accordance with any of claims 2 or 3,
**characterized in that** the force measuring device (30) comprises numerous piezo force transducers (36).

5. Planetary gear train arrangement in accordance with any of the preceding claims,
**characterized in that** the force measuring device (30) comprises numerous force transducers with electromagnetic compensation (38).

6. Planetary gear train arrangement in accordance with any of the preceding claims,
**characterized in that** the force measuring device (30) comprises numerous magnetorestrictive elements (40).

7. Planetary gear train arrangement in accordance with any of the preceding claims,
**characterized in that** the planetary gear train arrangement (10) comprises a housing (26) and **in that** the holding unit (24) is formed by the housing (26).

8. Electromechanical service brake (53) for a motor vehicle (64), comprising
- an electronic drive unit (54),
- a planetary gear train arrangement (10) in accordance with any of claims 1 to 7 which can be driven by the drive unit (54), wherein the force measuring device (30) for measuring the force acting between the held element and the holding unit (24) generates a corresponding force value signal (SKW), and
- a braking unit (58) for braking the motor vehicle (64) which can be operated by means of the drive unit (54) using the planetary gear train arrangement (10).

9. Electromechanical parking brake (81) for a motor vehicle (64), comprising
- an electronic drive unit (54),
- a planetary gear train arrangement (10) in accordance with any of claims 1 to 7 which can be driven by the drive unit (54), wherein the force measuring device (30) for measuring the force acting between the held element and the holding unit (24) generates a corresponding force value signal (SKW), and
- a braking unit (58) for retaining the motor vehicle (64) which can be operated by means of the drive unit (54) using the planetary gear train arrangement (10).

10. Motor vehicle (64) with an electromechanical service brake (53) in accordance with claim 8 and/or with an electromechanical parking brake (81) in accordance with claim 9.

11. Motor vehicle (64) in accordance with claim 9 or claim 10, comprising
- a set point generator (74) with which a set point for the braking force can be specified with which the braking unit (58) should brake the motor vehicle (64), wherein the set point generator (74) generates a corresponding set point signal (SSW), and
- a control unit (78) which receives the force value signal (SKW) and the set point signal (SSW), calculates, from the force value signal (SKW), the actual value of the braking force acting in the braking unit (58) and compares this to the set point and controls the electronic drive unit (54) in accordance with the results of the comparison.

12. Method for operating an electromechanical service brake (53) and/or an electromechanical parking brake for a motor vehicle (64), wherein the electromechanical service brake (53) comprises
- an electronic drive unit (54),
- a planetary gear train arrangement (10) in accordance with any of claims 1 to 7, which can be driven by the drive unit (54), and (74)
- a braking unit (58) for braking the motor vehicle (64) which can be operated by means of the drive unit (54) using the planetary gear train arrangement (10), and the motor vehicle (64)
- a set point generator (74) with which a set point for the braking force can be specified with which the braking unit (58) should brake the motor vehicle (64), and
- a control unit (78), wherein the method comprises the following steps:
- generating a force value signal (SKW) corresponding to the force acting between the held element and the holding unit (24) by means of a force measuring device (30),
- receiving the force value signal (SKW) and calculating, by means of the control unit (78), the actual value of the braking force acting in the braking unit (58),
- generating a set point signal (SSW) corresponding to a set point by means of the set point generator (74),
- receiving the set point signal (SSW) and comparing the actual value to the set point by means of the control unit (78), and
- controlling the electronic drive unit (54) in accordance with the results of the comparison by means of the control unit (78).

## Revendications

1. Dispositif de transmission à train épicycloïdal notamment pour un frein de service (53) électromécanique ou un frein de stationnement (81) électromécanique d'un véhicule (64) comprenant :
- une roue solaire centrale (12),
- un nombre de satellites (14) montés rotatifs sur un porte-satellites (16), et
- une couronne à denture intérieure (18) entourant les satellites (14), et
- un arbre de sortie (48),
- les satellites (14) étant montés sur le porte-satellites (16) de façon à rouler à la fois sur la roue solaire (12) et sur la roue à denture intérieure (18),
dans lequel
- la roue solaire (12) ou le porte-satellites (16) ou la couronne à denture intérieure (18) étant bloquées en rotation par une unité de retenue (24) exerçant un couple de retenue et entre l'unité de retenue (24) et l'élément maintenu solidairement en rotation ou entre l'unité de maintien (24) et une pièce intermédiaire (20) reliée solidairement en rotation à l'élément maintenu solidairement en rotation, il y a une installation de mesure de force (30) pour mesurer la force agissant entre l'élément maintenu et l'unité de maintien (24) par la force résultant du couple de retenue,
dispositif **caractérisé en ce que**
la force active est dans un rapport fixe avec le couple reçu par l'arbre de sortie (48).

2. Dispositif de transmission à train épicycloïdal selon la revendication 1,
**caractérisé en ce que**
l'installation de mesure de force (30) comporte un transducteur de force (32).

3. Dispositif de transmission à train épicycloïdal selon la revendication 2,
**caractérisé en ce que**
le transducteur de force (32) est un transducteur de force à ressort (34).

4. Dispositif de transmission à train épicycloïdal selon l'une des revendications 2 ou 3,
**caractérisé en ce que**
l'installation de mesure de force (30) comprend un certain nombre de transducteurs piézoélectriques de force (36).

5. Dispositif de transmission à train épicycloïdal selon l'une des revendications précédentes,
**caractérisé en ce que**
l'installation de mesure de force (30) comprend un certain nombre de transducteurs avec compensation électromécanique (38).

6. Dispositif de transmission à train épicycloïdal selon l'une des revendications précédentes,
**caractérisé en ce que**
l'installation de mesure de force (30) comprend un certain nombre d'éléments magnétostrictifs (40).

7. Dispositif de transmission à train épicycloïdal selon l'une des revendications précédentes,
**caractérisé en ce que**
le dispositif de transmission à roue solaire (10) comprend un boîtier (26) et l'unité de maintien (24) est formée par le boîtier (26).

8. Frein de service (53) électromécanique pour un véhicule à moteur (64) comprenant :
- une unité d'entraînement électronique (54),
- un dispositif de transmission à train épicycloïdal (10) selon l'une des revendications 1 à 7, qui est entraîné par l'unité d'entraînement (54), et pour mesurer la force agissant entre l'élément retenu et l'unité de maintien (24) l'installation de mesure de force (30) générant un signal de valeur de force (SKW) correspondant, et
- une unité de freinage (58) pour freiner le véhicule (64) qui peut être actionné à l'aide de l'unité d'entraînement (54) en utilisant le dispositif de transmission à satellite (10).

9. Frein de stationnement électromécanique (81) pour un véhicule (64) comprenant :
- une unité d'entraînement électronique (54),
- un dispositif de transmission à train épicycloïdal (10) selon l'une des revendications 1 à 7, qui est entraîné par l'unité d'entraînement (54),
* l'installation de mesure de force (30) générant un signal de valeur de force (SKW) mesurant la force agissant entre l'élément retenu et l'unité de maintien (24), et
une unité de freinage (58) pour immobiliser le véhicule (64), actionnée à l'aide de l'unité d'entraînement (54) en utilisant le dispositif de transmission à train épicycloïdal (10).

10. Véhicule automobile (64) équipé d'un frein de service électromécanique (53) selon la revendication 8 et/ou d'un frein de service électromécanique (81) selon la revendication 9.

11. Véhicule automobile (64) selon la revendication 9 ou selon la revendication 10, comprenant :
- un générateur de valeurs de consigne (74) qui prédéfinit une valeur de consigne pour la force de freinage, avec laquelle l'unité de freinage (58) doit freiner le véhicule (64), le générateur de valeur de consigne (74) générant un signal de valeur de consigne (SSW) correspondant, et
- une unité de commande (78) qui reçoit le signal de valeur de force (SKW) et le signal de valeur de consigne (SKW) pour calculer à partir du signal de valeur de force (SKW), la valeur réelle de la force de freinage pour l'installation de freinage (58) et le comparant à la valeur de consigne, l'unité d'entraînement électronique (54) commandant en fonction du résultat de la comparaison.

12. Procédé de gestion d'un frein de service (53) électromécanique et/ou d'un frein de stationnement électromécanique pour un véhicule (64),
- le frein de service électromécanique (53), l'unité d'entraînement électronique (54), un dispositif de transmission à train épicycloïdal (10) selon l'une des revendications 1 à 7, entraîné par l'unité d'entraînement (54) et (74),
- une unité de freinage (58) pour freiner le véhicule qui est actionné par l'unité d'entraînement (54) en utilisant le dispositif de transmission à train épicycloïdal et le véhicule (64),
- un générateur de valeur de consigne (74) qui prédéfinit une valeur de consigne pour la force de freinage que l'unité de freinage (58) doit appliquer pour freiner le véhicule (64), et
- une unité de commande (78),
le procédé comprenant les étapes suivantes consistant à :
- générer un signal de valeur de force (SKW) fourni par l'installation de mesure de force (30) correspondant à la force qui doit agir entre l'élément retenu et l'unité de maintien (24),
- recevoir le signal de valeur de force (SKW) et calculer la valeur réelle de la force de freinage appliquée à l'unité de frein (58) par l'unité de commande (78),
- générer un signal de valeur de consigne (SSW) correspondant à la valeur de consigne à l'aide du générateur de valeur de consigne (74),
- recevoir le signal de valeur de consigne (SSW) et comparer la valeur réelle à la valeur de consigne à l'aide de l'unité de commande (78), et
- commander l'unité d'entraînement électronique (54) selon le résultat de la comparaison par l'unité de commande (78).
